Europäisches Patentamt

European Patent Office

Office européen des brevets

(19)

(11) Veröffentlichungsnummer: **0 145 795**
**A1**

(12)

# EUROPÄISCHE PATENTANMELDUNG

(21) Anmeldenummer: 83112118.1

(22) Anmeldetag: 02.12.83

(51) Int. Cl.⁴: **B 60 B 33/00,** F 16 B 39/24

(43) Veröffentlichungstag der Anmeldung: 26.06.85
Patentblatt 85/26

(84) Benannte Vertragsstaaten: **DE FR GB IT SE**

(71) Anmelder: **Albert Schulte Söhne GmbH. & Co.,
Remscheider Strasse 25, D-5632 Wermelskirchen (DE)**

(72) Erfinder: **Sachser, Herbert, Vorm Eickerberg 4,
D-5632 Wermelskirchen (DE)**

(74) Vertreter: **Buse, Karl Georg, Dipl.-Phys. et al,
Patentanwälte Dipl.-Phys. Buse Dipl.-Phys. Mentzel
Dipl.-Ing. Ludewig Unterdörnen 114 Postfach 20 02 10,
D-5600 Wuppertal 2 (DE)**

(54) Lenkrolle mit einer Halterung zu ihrer lösbaren Befestigung.

(57) Die Lenkrolle weist eine Halterung zu ihrer lösbaren Befestigung in einem mit einem Hohlraum versehenen Geräte-, Rohrfuß od.dgl. auf. Die Halterung weist einen drehfest mit einem Schwenklager (22) verbundenen, aufragenden Schraubzapfen (24) auf, der von einer Spreizhülse (37) umfaßt ist. In diese Spreizhülse (37) fassen beidseitig Spreizkonen (35, 38) ein, die durch Axialverspannung die Spreizhülse (37) in dem Hohlraum festpressen, wobei ein Konus (35) mittels eines am Schwenklager (22) festlegbaren Sicherungsbleches (27) undrehbar gegenüber dem Schraubzapfen (24) festgehalten ist. Zur Vereinfachung der Montage ist zwischen Sicherungsblech (27) und Konus (35) eine Rückdrehsicherungsscheibe (30) angeordnet, die einerseits in eine Ausnehmung des Konus (35) und andererseits mit wenigstens einer Federzunge (33) in eine Ausnehmung des Sicherungsbleches (27) eingreift.

**PATENTANWÄLTE** 0145795

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 55 70 22/23/24 · Telex 8 591 606 wpat

5600 Wuppertal 2, den

<u>Kennwort:</u> "Rückdrehsicherungsscheibe"

Albert Schulte Söhne GmbH & Co.,
Remscheider Str. 25, 5632 Wermelskirchen

Lenkrolle mit einer Halterung zu ihrer lösbaren Befestigung

Die Erfindung betrifft eine Lenkrolle mit einer Halterung zur lösbaren Befestigung in einem einen Hohlraum aufweisenden Geräte-, Rohrfuß od.dgl., die einen drehfest mit einem Schwenklager verbundenen, aufragenden Schraubzapfen aufweist, der von einer Spannhülse umfaßt ist, die durch Axialverspannung mittels Spreizkonen in den Hohlraum einpreßbar ist, wobei ein Konus mittels eines am Schwenklager festlegbaren Sicherungsbleches undrehbar gegenüber dem Schraubzapfen festhaltbar ist.

Bei einer bekannten Lenkrolle der vorgenannten Art weist das Schwenklager oberseitig eine mit seiner äußeren Lagerschale fest verbundene Schlüsselplatte auf, welche beispielsweise als sechseckige Scheibe geformt ist und jede Umfangsseite eine Ausnehmung aufweist. Auf diese Schlüsselplatte ist ein über den Schraubzapfen aufsteckbares Sicherungsblech aufgelegt, welches die Ausnehmungen der Schlüsselplatte radial überragende Arretierlappen aufweist, und innenseitig mit dem Schraubzapfen benachbarten Aufwinklungen versehen ist, die in Nuten eines auf dem Sicherungsblech aufliegenden Spreizkonus eingreifen können. Dieser Spreizkonus greift in eine Spreizhülse, die ebenfalls von dem Schraubzapfen durchdrungen ist. Oberseitig weist dieser Schraubzapfen ein Bolzengewinde auf, auf welches ein weiterer Spreizkonus aufschraubbar ist. Zur Befestigung einer derartigen Lenkrolle in einem dafür vorgesehenen Hohlraum eines Gerätefußes wird zunächst durch Aufschrauben des oberen Spreizkonus auf den Schraubzapfen die Spreizhülse so weit auseinandergedrückt, daß sie schließend in den Befestigungshohlraum eingeführt werden kann. Durch weiteres Drehen des Schraubzapfens der in den Hohlraum eingeführten Halterung bewegt sich der obere Spreizkonus auf den unteren Spreizkonus zu und drückt dabei die Spreizhülse auseinander und verspannt diese mit der Hohlrauminnenwandung des Gerätefußes. Nachdem die Lenkrolle über ihre Halterung reibschlüssig in dem Hohlraum festgesetzt ist, werden die Arretierlappen des Sicherungsbleches derart nach unten abgebogen, daß sie in die Umfangsausnehmungen der Schlüsselplatte greifen. Dadurch wird eine Drehung der Halterung im Lösesinne im Hohlraum des Gerätefußes vermieden, so daß die am Gerätefuß befestigte Lenkrolle in ihrer Spannlage gesichert ist. Das Niederdrücken der Arretierlappen ist somit nach erfolgter Montage der Lenkrolle am Gerätefuß erforderlich, wobei häufig Beschädigungen während des Niederdrückens der Arretierlappen am Schwenklager auftreten. Dies ist insbesondere dann störend, wenn die obere Lagerschale der Lenkrolle vernickelt, verchromt od.dgl. ist.

Die Aufgabe der vorliegenden Erfindung besteht darin, eine Lenkrolle der eingangs genannten Art dahingehend zu verbessern, daß die Sicherung der Befestigungslage der Lenkrollenhalterung selbsttätig während des Spannvorganges erfolgt.

Diese Aufgabe ist erfindungsgemäß dadurch gelöst, daß zwischen Sicherungsblech und Konus eine Rückdrehsicherungsscheibe angeordnet ist, die einerseits in eine Ausnehmung
des Konus und andererseits mit wenigstens einer Federzunge in eine Ausnehmung des Sicherungsbleches eingreift.
Dadurch ist es möglich, das Sicherungsblech bereits vor
der Montage mit Sperrfingern zu versehen, so daß ein auf
die Schlüsselplatte des Schwenklagers aufgesetztes
Sicherungsblech bereits an diesem arretiert ist, bevor
die Verspannung der Spreizhülse eingeleitet wird. Außerdem
wird mit der Federzunge erreicht, daß zwar eine Drehung
der Konen im Sperrsinne möglich, jedoch eine Drehung im
Lösesinne unmöglich ist. Jedoch kann eine bewußt herbeigeführte Lösung bewerkstelligt werden, indem die Arretierlappen des Sicherungsbleches aus der Ausnehmung der
Schlüsselplatte wieder entfernt werden. Dabei ist es
vorteilhaft, wenn die Rückdrehsicherungsscheibe im Bereich
ihres den Schraubzapfen umgreifenden Loches wenigstens
eine in eine Nut im Konus eingreifende Abwinklung und
wenigstens eine aus ihrer Unterseite austretende, entgegen dem Uhrzeigerdrehsinn sperrwirksam werdende Federzunge aufweist.

Zur Bildung einfacher, leicht herzustellender Bauteile
sind die Abwinklung und die Federzunge des scheibenartig ausgebildeten Rückdrehsicherungsringes durch freigeschnittene Ausdrückungen des Scheibenwerkstoffes gebildet. Dabei können an der Rückdrehsicherungsscheibe
statt nur einer einzigen Abwinklung und nur einer
einzigen Federzunge mehrere Abwinklungen und auch Federzungen vorhanden sein. Um gegebenenfalls die Spreizhülse
nach dem Einstecken in den Hohlraum des Geräte- oder
Rohrfußes vorspannen zu können, ist es zur undrehbaren
Festhaltung der Sicherungsscheibe vorteilhaft, wenn
außerdem die Rückdrehsicherungscheibe an ihrem Umfang
wenigstens einen Haltelappen aufweist.

0145795

Die Erfindung ist in einem Ausführungsbeispiel zeichnerisch dargestellt und wird nachfolgend näher erläutert. Es zeigen:

    Fig. 1  die erfindungsgemäße Laufrolle, deren Schwenklager und Befestigungshalterung in einem Vertikalschnitt dargestellt ist,

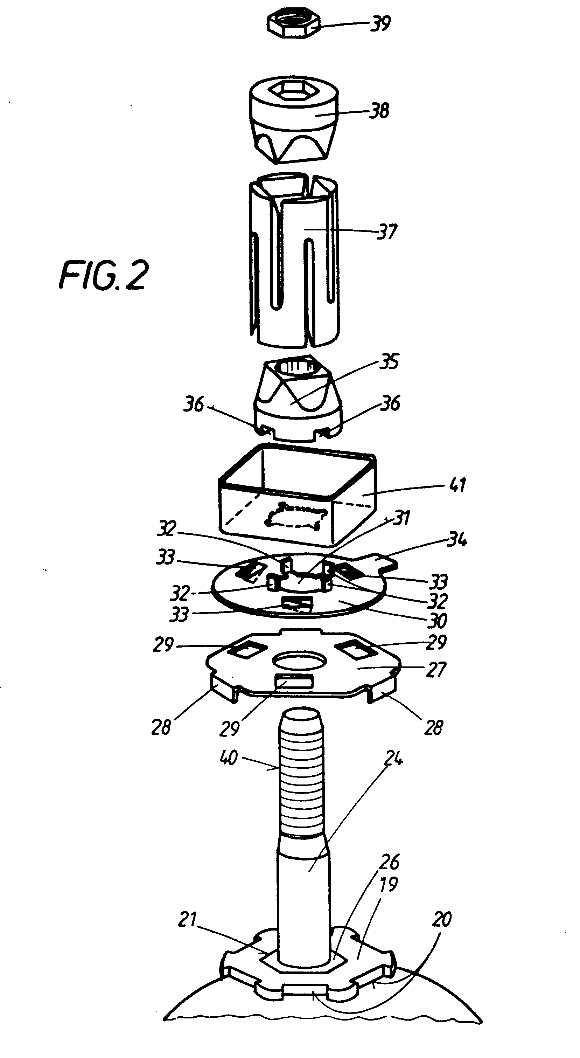

    Fig. 2  die Halterung der Lenkrolle in einer perspektivischen Explosionsdarstellung.

Die Lenkrolle weist eine Radgabel 10 auf, die auf einer Achse 11 ein drehbar gelagertes Laufrad 12 lagert. Die beiden Gabelschenkel sind über einen Gabelrücken 13 miteinander verbunden, der zwischen eine obere Lagerschale 14 und eine untere Lagerschale 15 faßt. Diese Lagerschalen sind miteinander beispielsweise durch Pressen derart verbunden, daß einerseits zwischen dem Gabelrücken 13 und der oberen Lagerschale 14 sowie auch der unteren Lagerschale 15 zwei Kugelkränze 16 und 17 angeordnet sind, wobei im mittleren Bereich der Lagerschalen 14 und 15 ein zu den Kugelkränzen 16 und 17 konzentrischer Durchbruch 18 verbleibt. Die Lagerschale 14 ist oberseitig durch eine Schlüsselplatte 19 abgedeckt, die etwa die Form einer sechseckigen Scheibe aufweist, die an ihren Schlüsselseiten mit nutartigen Rücksprüngen 20 versehen ist und ein konzentrisch zum Durchbruch 18 angeordnetes unrundes Loch 21 - wie beispielsweise ein Sechseckloch - aufweist. Die mit der Schlüsselplatte fest verbundene Lagerschale 14 sowie die Lagerschale 15 bilden zusammen mit den Kugeldrehkränzen 16 und 17 ein relativ zur Radgabel 10 drehbares Schwenklager 22. Die Mitte des Schwenklagers 22 und die Mitte der Achse 11 sind um den sogenannten Nachlauf gegeneinander versetzt.

Im vorderen, dem Schwenklager 22 nebengeordneten Bereich der Radgabelhöhlung ist in beiden Gabelschenkeln der Radgabel 10 eine Bohrung 23 für eine nicht dargestellte Feststellvorrichtung vorgesehen. Für den Erfindungsgegenstand ist das Vorhandensein dieser Feststellvorrichtung für die Lenkrolle bedeutungslos, so daß eine eingehendere Beschreibung einer solchen Feststellvorrichtung nicht erforderlich ist.

In den Durchbruch 18 des Schwenklagers 22 faßt der Schaftteil 25 eines aus dem Schwenklager 22 oberseitig ragenden Schraubzapfens 24. Mit dem Schaftteil 25 ist dieser Schraubzapfen im Durchbruch 18 des Schwenklagers 22 vernietet und außerdem durch einen Sechskantabschnitt 26 im sechseckigen Loch 21 der Schlüsselplatte 19 gegen Verdrehung gesichert. Die Schlüsselplatte 19 ist von einem Sicherungsblech 27 übergriffen, das an drei Seiten der Schlüsselplatte 19 mit abgewinkelten Arretierlappen 28 in die Rücksprünge 20 der Schlüsselplatte paßt. Das Sicherungsblech 27 weist außerdem drei auf gleichem Durchmesser gleichmäßig verteilt angeordnete Ausnehmungen 29 auf, die beispielsweise rechteckförmig gestaltet sind. Auf diesem Sicherungsblech 27 liegt eine Rückdrehsicherungsscheibe 30 auf, die ebenfalls wie das Sicherungsblech 27 mit einem Loch 31 den Schraubzapfen 24 umfaßt und im Lochbereich vier an dessen Umfang gleichmäßig verteilt aufragende Abwinklungen 32 aufweist. Außerdem weist die

Ü145795

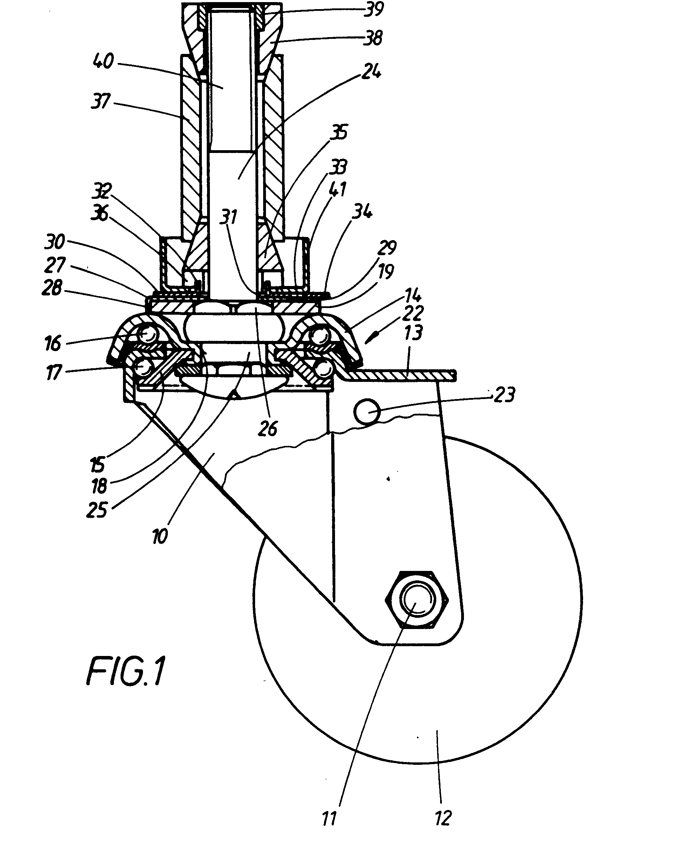

Sicherungsscheibe 30 drei gleichmäßig in Übereinstimmung mit den Ausnehmungen 29 im Sicherungsblech 27 angeordnete nach unten abragende Federzungen 33 auf, welche in die rechteckförmigen Ausnehmungen 29 des Sicherungsbleches 28 eingreifen können. Dabei sind die Federzungen 33 derart angeordnet, daß sie eine Drehung der Rückdrehsicherungsscheibe 30 entgegen dem Uhrzeigersinn nicht zulassen und die Rückdrehsicherungsscheibe deshalb nur im Spannsinn verdrehbar ist. Außerdem weist die Rückdrehsicherungsscheibe 30 an ihrem Außenumfang einen Haltelappen 34 auf, welcher zur Festhaltung der Rückdrehsicherungsscheibe 30 beim Vorspannen der Spreizhülse im Hohlraum des Geräte- oder Rohrfußes dient. Über der Rückdreh- 24 umfassender Konus 35, der sich nach oben hin verjüngt und unterseitig mit kreuzweise angeordneten Nuten 36 versehen ist, in welche die Abwinklungen 32 der Rückdrehsicherungsscheibe 30 schließend eingreifen können. Außerdem greift der Konus 35 in eine Spreizhülse 37 ein, die ihrerseits auch den Schraubzapfen 24 umfaßt. In das Oberende dieser Spreizhülse 37 greift ein weiterer Spreizkonus 38 ein, in den eine Spannmutter 39 drehfest eingelegt ist, die auf den Gewindeabschnitt 40 des Schraubzapfens 24 aufdrehbar ist. Wenn nun die zur Halterung der Lenkrolle in beispielsweise einem Rohrfuß dienenden Bauteile in der aus Fig. 1 ersichtlichen Lage übereinander angeordnet sind, so läßt sich der Schraubzapfen 24 mit der Spreizhülse 37 und den Konen 35 und 38 in den Rohrfuß einführen und in diesem verspannen, indem das SChwenklager 22 mit dem drehfest damit verbundenen Schraubzapfen 24 im Uhrzeigersinn gedreht wird. Die durch Reibschluß an der Innenwandung des Rohrzapfens festgehaltene Spreizhülse 37 hindert ihrerseits auch die Konen 35 und 38 an einer Drehung, so daß während des Einschraubvorganges des Schraubzapfens 24 die Konen 35 und 38 in axialer Richtung aufeinander zu bewegt werden und die Spreizhülse 37 in radialer Richtung auseinanderdrücken, so daß eine immer festere Reibschlußverbindung
zwischen der Spreizhülse 37 und der Innenwandung des
Rohrfußes erfolgt. Während der Drehung des Schraubzapfens
24 und des damit drehfest verbundenen Schwenklagers 22
wird auch das Sicherungsblech 27 mitgedreht und gleitet
über die Federzungen der durch den Konus 35 an einer
Drehung gehinderten Rückdrehsicherungsscheibe 30. Nach
beendetem Spannvorgang verhindern die in eine Ausnehmung
29 des Sicherungsbleches 27 eindringenden Federzungen
eine Rückdrehung entgegen dem Uhrzeigersinn, wodurch
ein unbeabsichtigtes Lösen der Halterung aus dem Rohrfuß
sicher verhindert wird.

Wenn jedoch infolge Verschleiß oder sonstiger Umstände
die Lenkrolle aus dem Rohrfuß entfernt werden soll, so
kann durch Aufbiegen der Arretierlappen 28 des Sicherungsbleches 27 der Schraubzapfen 24 entgegen dem Uhrzeigersinn gedreht und damit die Spreizkonen auseinanderbewegt
und die Spreizhülse 37 gelöst werden.

In Fig. 1 befindet sich zwischen dem unteren Konus 35
und der Rückdrehsicherungsscheibe 30 eine Topfscheibe 41,
welche beispielsweise einen nicht dargestellten Rohrfuß
bzw. einen Gerätefuß umfassen kann. Obschon diese Topfscheibe 41 einen optisch ansprechenden Abschluß des Rohrfußes bildet, kann jedoch darauf fallweise verzichtet
werden.

Wie bereits erwähnt, gibt die dargestellte und vorbeschriebene Lenkrolle die Erfindung nur beispielsweise
wieder, die keinesfalls allein darauf beschränkt ist.
Es sind vielmehr noch mancherlei Änderungen und andere
Ausgestaltungen der Efindung denkbar.

0145795

**PATENTANWÄLTE**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 557022/23/24 · Telex 8591606 wpat

5600 Wuppertal 2, den

Kennwort: "Rückdrehsicherungsscheibe"

Albert Schulte Söhne GmbH & Co.,
Remscheider Str. 25, 5632 Wermelskirchen

---

B e z u g s z e i c h e n l i s t e :

---

| | | | | |
|----|-----------------------|--|----|-----------------|
| 10 | Radgabel              |  | 34 | Haltelappen     |
| 11 | Achse                 |  | 35 | Konus           |
| 12 | Laufrad               |  | 36 | Nut             |
| 13 | Gabelrücken           |  | 37 | Spreizhülse     |
| 14 | Lagerschale, obere    |  | 38 | Spreizkonus     |
| 15 | Lagerschale, untere   |  | 39 | Spannmutter     |
| 16 | Kugelkranz            |  | 40 | Gewindeabschnitt|
| 17 | Kugelkranz            |  | 41 | Topfscheibe     |
| 18 | Durchbruch            |  |    |                 |
| 19 | Schlüsselplatte       |  |    |                 |
| 20 | Rücksprung            |  |    |                 |
| 21 | Loch, unrund          |  |    |                 |
| 22 | Schwenklager          |  |    |                 |
| 23 | Bohrung               |  |    |                 |
| 24 | Schraubzapfen         |  |    |                 |
| 25 | Schaftteil            |  |    |                 |
| 26 | Sechskantabschnitt    |  |    |                 |
| 27 | Sicherungsblech       |  |    |                 |
| 28 | Arretierlappen, an 27 |  |    |                 |
| 29 | Ausnehmung, in 27     |  |    |                 |
| 30 | Rückdrehsicherungsscheibe | | |               |
| 31 | Loch in 30            |  |    |                 |
| 32 | Abwinklung            |  |    |                 |
| 33 | Federzunge            |  |    |                 |

**PATENTANWÄLTE**

**:L.-PHYS. BUSE · DIPL.-PHYS. MENTZEL · DIPL.-ING. LUDEWIG**

erdörnen 114 · Postfach 200210 · 5600 Wuppertal 2 · Fernruf (0202) 557022/23/24 · Telex 8591606 wpat

$0145795$

37                    **5600 Wuppertal 2, den**

<u>Kennwort:</u> "Rückdrehsicherungsscheibe"


Albert Schulte Söhne GmbH & Co.,
Remscheider Str. 25, 5632 Wermelskirchen

---

A n s p r ü c h e :

---


1.) Lenkrolle mit einer Halterung zur lösbaren Befestigung in einem einen Hohlraum aufweisenden Geräte-,
Rohrfuß od.dgl., die einen drehfest mit einem
Schwenklager verbundenen, aufragenden Schraubzapfen
aufweist, der von einer Spreizhülse umfaßt ist, die
durch Axialverspannung mittels Spreizkonen in den
Hohlraum einpreßbar ist, wobei ein Konus mittels
eines am Schwenklager festlegbaren Sicherungsbleches
undrehbar gegenüber dem Schraubzapfen festhaltbar
ist,

d a d u r c h   g e k e n n z e i c h n e t ,

daß zwischen Sicherungsblech (27) und Konus (35)
eine Rückdrehsicherungsscheibe (30) angeordnet ist,
die einerseits in eine Ausnehmung (36) des Konus
(35) und andererseits mit wenigstens einer Federzunge (33) in eine Ausnehmung (29) des Sicherungsbleches (27) eingreift.

2.) Lenkrolle nach Anspruch 1, dadurch gekennzeichnet,
daß die Rückdrehsicherungsscheibe (30) im Bereich
ihres den Schraubzapfen (24) umgreifenden Loches (31) wenigstens eine in eine Nut (36) im Konus (35) eingreifende Abwinklung (32) und wenigstens eine aus ihrer Unterseite austretende, entgegen dem Uhrzeigerdrehsinn sperrwirksam werdende Federzunge (33) aufweist.

3.) Lenkrolle nach Anspruch 1 und/oder 2, dadurch gekennzeichnet, daß die Abwinklung (32) und die Federzunge (33) des scheibenartig ausgebildeten Rückdrehsicherungsringes (30) durch freigeschnittene Ausdrückungen des Scheibenwerkstoffes gebildet sind.

4.) Lenkrolle nach einem oder mehreren der vorhergehenden Ansprüche, dadurch gekennzeichnet, daß die Rückdrehsicherungsscheibe (30) an ihrem Umfang wenigstens einen Haltelappen (34) aufweist.

1/2

FIG.1

FIG.2

2/2

0145795

Europäisches Patentamt

**EUROPÄISCHER RECHERCHENBERICHT**

0145795

Nummer der Anmeldung

EP 83 11 2118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-1 596 797 (HAPPE) <br> * Seite 3, Zeile 28 - Seite 4, Zeile 18; Figuren 1,6 * | 1-3 | B 60 B 33/00 <br> F 16 B 39/24 |
| | --- | | |
| Y | US-A-1 622 581 (GUNKEL) <br> * Seite 1, Zeile 86 - Seite 2, Zeile 8; Figuren 8,9 * | 1-3 | |
| | --- | | |
| A | US-A-2 416 532 (NALLE) <br> * Spalte 1, Zeile 51 - Spalte 2, Zeile 42; Figuren 1,3,7 * | 1 | |
| | --- | | |
| A | FR-A-2 194 256 (PIEL) <br> * Seite 2, Zeile 23 - Seite 3, Zeile 19; Figuren 1-3 * | 2,3 | |
| | --- | | **RECHERCHIERTE SACHGEBIETE (Int. Cl. 3)** |
| A | US-A-3 263 727 (HERPOLSHEIMER) <br> * Spalte 2, Zeile 69 - Spalte 4, Zeile 15; Figuren 1-7 * | 2,3 | |
| | ----- | | B 60 B 33 <br> F 16 B 39 |

Der vorliegende Recherchenbericht wurde für alle Patentansprüche erstellt.

| Recherchenort DEN HAAG | Abschlußdatum der Recherche 03-08-1984 | Prüfer AYITER I. |
|---|---|---|